# EUROPÄISCHE PATENTSCHRIFT

(11) **EP 1 625 793 B1**
(45) Veröffentlichungstag und Bekanntmachung des Hinweises auf die Patenterteilung: **27.02.2008**
(21) Anmeldenummer: 05015187.7
(22) Anmeldetag: 13.07.2005
(51) Int. Cl.: A22C 15/00

(54) **Verfahren und Vorrichtung zum Be- und/oder Entladen einen Speichers**
Method and device for loading and unloading a storage device
Dispositif et procede de chargement et de dechargement d'un conteneur de stockage

(30) Priorität: 12.08.2004 DE 102004039375
(43) Veröffentlichungstag der Anmeldung: 15.02.2006
(73) Patentinhaber: Stimpfl, Christof, 88267 Vogt (DE)
(72) Erfinder: Stimpfl, Christof, 88267 Vogt (DE)
(74) Vertreter: Weiss, Peter

(56) Entgegenhaltungen:
- DE-A1- 4 318 301
- DE-A1- 19 506 480
- DE-U1- 20 010 268
- US-A1- 2004 142 650

## Beschreibung

Die Erfindung betrifft eine Vorrichtung zum Entladen von Rauchwägen, in denen Würste mittels Fäden an Stöcken aufgehängt sind, mit in der Höhe verfahrbaren Greifarmen, die an Säulen angeordnet und horizontal ausfahrbar sind, wobei den Greifarmen Fördermittel für die Stöcke, an denen die Würste hängen, zugeordnet sind.

### STAND DER TECHNIK

Es ist bekannt, dass Wurst- und Fleischwaren auf Rauchstöcken aufgefädelt und in Rauchwägen eingeladen werden. In der Regel hängen die Wurst- und Fleischwaren an Fäden an diesen Rauchstöcken, wodurch ein Rauchstock ein Gewicht von mehreren Kilogramm aufweist. Da üblicherweise weibliche Arbeitskräfte für die Beladung von Rauchwägen verwendet werden, bedeutet das Anheben einer derartigen Last für die Arbeitskraft eine erhebliche Belastung.

Aus der DD 221 978 A1 ist ein Verfahren und eine Vorrichtung zum mechanischen Beladen von Regalen, insbesondere Rauchwägen bekannt, bei denen mittels Einsatz eines vertikalen Kreisförderers die mit Wurst- oder Fleischwaren bestückten Stäbe in die entsprechenden Ebenen des Rauchwagens gefördert werden. Anschliessend erfolgt die Positionierung im Rauchwagen und das Ablegen der Stäbe in die Aufnahmeprofile. Hierfür ist ein Beladeelevator vorgesehen, von dem aus die Rauchstöcke auf eine Beschickungseinheit übergeben werden. Von der Beschickungseinheit werden dann die Stöcke in den Rauchwagen übertragen. Zur Überführung der Stöcke von dem Beladeelevator zur Beschickungseinheit müssen zusätzliche Transportschienen vorgesehen sein, die durch eine koordinierte Hub-/Schubbewegung den vom Beladeelevator übernommenen Stab auf den profilierten Aufnahmearmen weiter transportieren. Dies ist aufwendig. Ferner müssen die Transportschienen genau synchronisiert sein.

Aus der DD 250 627 A3 ist wiederum eine Vorrichtung zum Entladen von Rauchwägen bekannt. Hierbei wird jeweils ein Rauchspiess von einer Greifervorrichtung erfasst und bis zum Übergabepunkt an der Entladeeinheit transportiert. Diese Entladeeinheit ergreift den behangenen Rauchspiess, während die andere Entladeeinheit den Rauchspiess freigibt. Danach wird die zweite Entladeeinheit gedreht und kippt den behangenen Rauchspiess zur Rollenbahn hin ab, so dass am Rauchspiess hängende Würste in den auf der Rollenbahn stehenden Fleischbehälter gleiten. Damit ist aber nichts weiter erreicht, als ein Abfädeln der Würste vom Rauchspiess. Die an den Würsten verbleibenden Fäden können sich insbesondere bei einem späteren Verpacken in Schlauchbeutel als sehr störend auswirken.

Eine Verbesserung solch eines Handlingsystems für Würste wird in der US 2004/0142650 A1 beschrieben. Hierbei ist einem Traggestell, in welchem Würste an Schnüren an Rauchstöcken hängen, eine Handlingeinrichtung mit einer Greifeinrichtung und einer daran angeordneten Klemmeinrichtung zum Entnehmen und/oder Einsetzen des Rauchstockes aus oder in das Traggestell zugeordnet. Nach dem Ergreifen eines Rauchstockes wird die Greifeinrichtung vertikal in die Höhe gefahren, so dass eine dort angeordnete Schneideinrichtung die Würste von dem Rauchstock abschneiden kann, worauf diese einer weiteren Bearbeitung zugeführt werden.

Nachteilig hierbei ist jedoch, dass immer nur ein einziger Rauchstock aus dem Traggestell entnommen oder in das Traggestell eingesetzt werden kann. Dies macht ein Be- und/oder Entladen zeitintensiv. Darüber hinaus weist das Handlingsystem einen recht umständlichen Aufbau und damit eine umständliche Handhabung auf, um die Würste schlussendlich ihrer weiteren Bearbeitung zuzuführen.

Aus der DE 195 06 480 A1 ist eine Anlage zur Beschickung bzw. Entladung von Transportwagen mit Lebensmittel behängten Spiessen bekannt. Diese Anlage umfasst eine im unteren Bereich am Transportwagen angreifende Verschiebeeinrichtung, einen Hubbalkenförderer mit Fördergurt, der entlang von Führungssäulen vertikal verfahrbar ist, und einen sich daran nach hinten anschliessenden Schrägförderer, auf dem die entnommenen Spiesse in eine Abnahmestelle gefördert werden.

### AUFGABE

Aufgabe der vorliegenden Erfindung ist es, eine Vorrichtung der o.g. Art zu entwickeln, mit denen nicht nur ein automatisches Entladen von Würsten aus einem Randwagen stattfindet, sondern diesen Vorgang auch beschleunigt und die Würste dabei für eine spätere Verarbeitung vorbereitet werden. Darüber hinaus soll es möglich sein, eine Vielzahl von Rauchstöcken gleichzeitig zu verarbeiten, wobei die Vorrichtung hierzu einfach zu handhaben ist. Damit sollen Zeit und Kosten gespart werden.

### LÖSUNG DER AUFGABE

Zur Lösung dieser Aufgabe führt, dass zwei Fördermittel zum Längstransfer der Stöcke zu einer Schneideinrichtung hin vorgesehen sind, denen ein weiteres Fördermittel zum Quertransfer der Stöcke oberhalb der Schneideinrichtung quer zu den zwei Fördermitteln verlaufend zugeordnet ist.

Die Fördermittel sind so ausgestaltet, dass sie von den Greifarmen erreichbar sind, d.h., die Greifarme entnehmen Rauchstöcke aus dem Rauchwagen und übergeben diese dann an die Fördermittel. Als Fördermittel sind der Einfachheit halber Endlosketten denkbar. Die Anzahl der nacheinandergeschalteten Fördermittel sowie deren Anordnung richtet sich nach dem Wunsch des Benutzers. Wesentlich ist allein, dass die Rauchstöcke schnellstmöglich die Schneideinrichtung erreichen.

Weiterhin sollen sich die Greifarme beispielsweise an einem Portal befinden, in dem auch die Säulen vorgesehen sind. Die Greifarme sind so ausgestaltet, dass sie entweder in beide Richtungen aus dem Portal herausfahrbar sind oder die Greifarme können auch aus mehreren teleskopartig ausfahrbaren Teilen bestehen. Hier sind viele Möglichkeiten denkbar und sollen vom Erfindungsgedanken umfasst sein.

Eine Mehrzahl von Rauchstöcken wird somit gleichzeitig von den Greifarmen untergriffen und in den Rauchwagen aus dem Rauchwagen entnommen. Hierdurch wird der Entladevorgang wesentlich beschleunigt.

Nach dem Entladen erfolgt ein automatischer Transport der Rauchstöcke zu einer Schneideinrichtung. An dieser Schneideinrichtung werden die Fäden durchtrennt, so dass sie sich anschliessend nicht mehr störend auf einen weiteren Bearbeitungsvorgang auswirken können.

In einem bevorzugten Ausführungsbeispiel ist vorgesehen, dass der Schneideinrichtung zumindest ein Sensor vorgesetzt ist, welcher einen Clip, den Wurstzipfel und/oder den Faden in seiner Dimensionierung erkennt. In einer entsprechenden Steuerung werden die Signale dieses Sensors so aufgearbeitet, dass eine Steuerung der Schneideinrichtung erfolgt, die entsprechend angehoben oder abgesenkt wird, damit der Schnitt des Fadens in der gewünschten Höhe erfolgt. Beispielsweise kann der Schnitt exakt auf der Höhe des Endes des Wurstzipfels erfolgen, so dass dadurch gewährleistet ist, dass keinerlei Faden über den Wurstzipfel heraussteht. Im Rahmen der Erfindung soll aber auch liegen, dass, falls gewünscht, beispielsweise ein vorhandener Clip entfernt werden kann.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine Frontansicht einer erfindungsgemässen Vorrichtung zum Be-und/oder Entladen eines Speichers;
- Figur 2: eine Seitenansicht des Speichers gemäss Figur 1;
- Figur 3: eine Draufsicht des Speichers gemäss Figur 2.

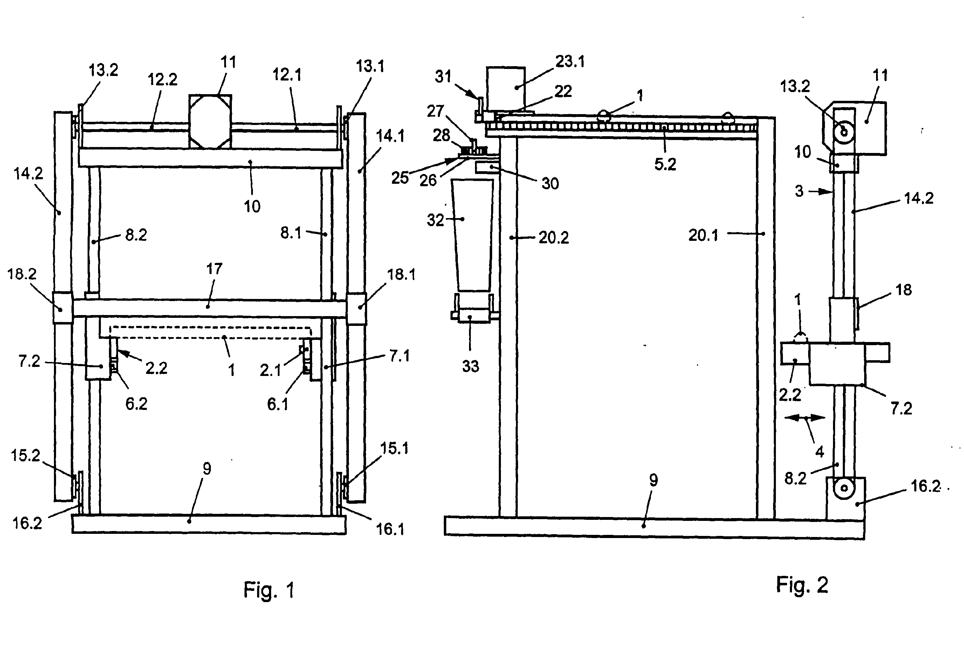

Die erfindungsgemässe Vorrichtung gemäss den Figuren 1 bis 3 dient vor allem zum Be- und/oder Entladen von Rauchwägen, wobei diese im vorliegenden Fall nicht gezeigt sind. In Rauchwägen befinden sich Würste, an Fäden aufgehängt, an sogenannten Rauchstöcken 1. Diese Rauchstöcke 1 sind im vorliegenden Fall gestrichelt angedeutet.

Zum Be- und/oder Entladen von derartigen Rauchwägen, d.h., zum Manipulieren von den Rauchstöcken 1 weist die erfindungsgemässe Vorrichtung zwei Greifarme 2.1 und 2.2 auf, die an einem Portal 3 vorgesehen sind. Die Greifarme 2.1 und 2.2 sind streifenförmig ausgebildet und in der Waagrechten gemäss dem Doppelpfeil 4 in Figur 2 bewegbar. Sie sind so ausgestaltet, dass sie frontseitig Rauchstöcke 1 aus einem Rauchwagen entnehmen können, diese durch das Portal 3 verbringen und nach hinten auf waagrecht liegende Transportketten 5.1 und 5.2 ablegen können.

Dem waagrechten Bewegen der Greifarme 2.1 und 2.2 dienen beispielsweise Zahnräder 6.1 und 6.2, die in eine gezahnte Unterseite des Greifarms 2.1 bzw. 2.2 eingreifen. Denkbar ist auch, dass der Greifarm 2.1 und 2.2, wie in Figur 1 angedeutet ist, zweigeteilt ausgebildet ist, so dass der Rauchstock 1 von einem ersten Teil, der ihn aus dem Rauchwagen holt, auf einen zweiten Teil verlagert werden kann.

Die Greifarme 2.1 und 2.2 befinden sich an Vertikalschlitten 7.1 und 7.2, welche entlang von Säulen 8.1 und 8.2 laufen. Diese Säulen 8.1 und 8.2 befinden sich zwischen einem Grundrahmen 9 und einer Traverse 10. Auf der Traverse 10 sitzt ein Motor 11 auf, der über beidseitig abragende Wellen 12.1 und 12.2 Zahnräder 13.1 und 13.2 antreibt.

Jedes Zahnrad 13.1 und 13.2 wird von einem Zahnriemen 14.1 und 14.2 umschlungen, wobei der Zahnriemen 14.1 und 14.2 jeweils als ein Endlosband ausgebildet ist und im unteren Bereich eine Umlenkrolle 15.1 bzw. 15.2 umläuft. Diese Umlenkrollen 15.1 und 15.2 sind jeweils über eine Lagerlasche 16.1 und 16.2 mit dem Grundrahmen 9 verbunden.

An den Zahnriemen 14.1 und 14.2 ist ein Querträger 17 über Anschlussschuhe 18.1 bzw. 18.2 befestigt, der wiederum in Verbindung mit den Vertikalschlitten 7.1 und 7.2 steht.

Die Transportketten 5.1 und 5.2 liegen jeweils auf einer Tragplatte 19.1 bzw. 19.2 auf, wobei jede Tragplatte 19.1 und 19.2 zwischen zwei Vertikalpfosten 20.1 bis 20.3 angeordnet ist. Die Vertikalpfosten 20.1 bis 20.3 stehen wiederum auf dem Grundrahmen 9 auf.

Jede Transportkette 5.1 bzw. 5.2 ist als Endloskette ausgebildet und umschlingt ein Umlenkzahnrad 21 sowie ein nicht näher angedeutetes Antriebszahnrad, welches über einen Wellenstummel 22 mit einem Motor 23.1 in Verbindung steht. Der Motor 23.1 ist über eine Verbindungswelle 24 mit einem Motor 23.2 für die Antriebskette 5.1 synchronisiert.

Unterhalb der Motoren 23.1 und 23.2 ist vor dem Vertikalpfosten 20.2 und dem diesem gegenüberliegenden, jedoch nicht gekennzeichneten Vertikalpfosten ein umgedrehtes T-förmiges Profil 25 angeordnet. Auf diese Weise bildet das Profil 25 eine Tragfläche 26 mit aufragender Mittelwand 27. Diese Mittelwand 27 wird von einer weiteren Endloskette 28 umlaufen, an welcher Anschläge 29.1 bis 29.3 festgelegt sind.

In dem Profil 25 ist an dem Vertikalpfosten 20.2 eine nur schematisch angedeutete Schneideinrichtung 30 zugeordnet, die bevorzugt entlang dem Vertikalpfosten 20.2 in der Höhe versetzbar ist. Beispielsweise kann die Schneideinrichtung 30 eine pneumatisch betätigte Schere aufweisen.

Zur Halterung eines Rauchstockes 1 auf der Endloskette 28 beim Schneiden ragt vom Motor 23.1 ein Niederhalter 31 ab, der bei Gebrauch auf den Rauchstock 1 abgesenkt werden kann.

Unterhalb der Schneideinrichtung 30 ist ein Schacht 32 vorgesehen, über den vom Rauchstock 1 abgeschnittene Würste auf ein Transportband 33 fallen können. Dieser Schacht 32 ist bevorzugt verschiebbar, so dass er unterschiedlichen Würsten bzw. unterschiedlichen Anordnungen der Würste am Rauchstock 1 Rechnung tragen kann.

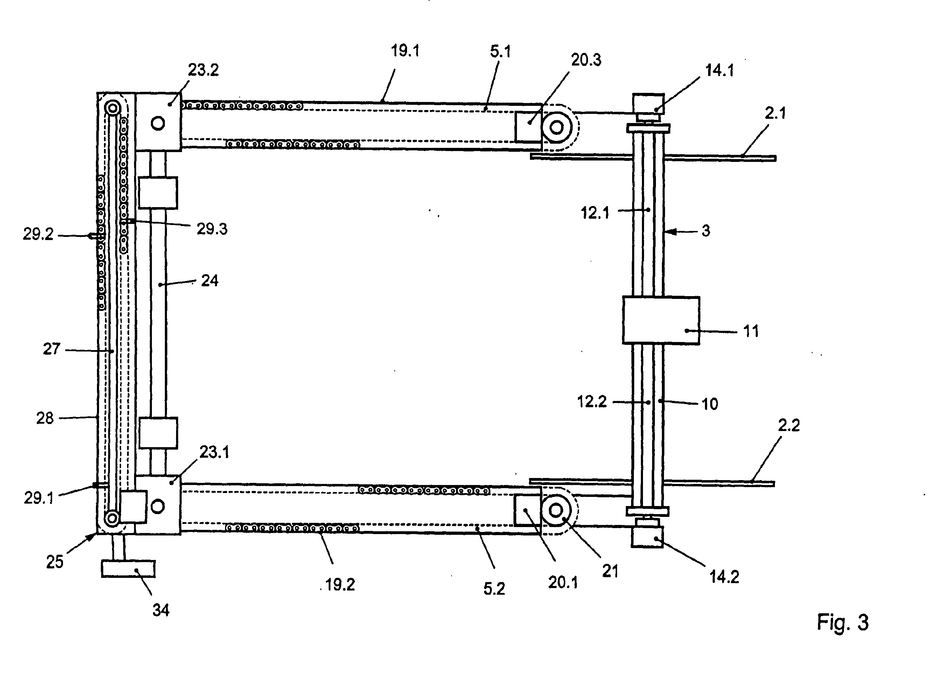

Zum Ausleiten der von den Würsten befreiten Rauchstöcke 1 aus der Vorrichtung ist noch eine Leitrolle 34 vorgesehen, welche nur in Figur 3 gezeigt ist.

Die Funktionsweise der vorliegenden Erfindung ist folgende:

Zum Beladen eines Rauchwagens gelangen die Rauchstöcke 1 mit daran hängenden Würsten auf die Greifarme 2.1 und 2.2, was in beliebiger Art und Weise geschehen kann. Der Rauchwagen steht vor dem Portal 3. Werden nun die Greifarme 2.1 und 2.2 in der Höhe verfahren und in der Waagrechten ausgefahren, so können die Rauchstöcke 1 in die gewünschten Etagen in dem Rauchwagen eingesetzt werden. Dies kann über entsprechende Lichtschranken und Näherungsschalter vollautomatisch geschehen.

Zum Entladen wird der Rauchwagen wiederum vor das Portal 3 gefahren. Die Greifarme 2.1 und 2.2 werden auf die Höhe der zu entnehmenden Rauchstöcke 1 mittels den Zahnriemen 14.1 und 14.2 über die Vertikalschlitten 7.1 und 7.2 angehoben und sodann beispielsweise über die Zahnräder 6.1 und 6.2 in der Waagrechten ausgefahren. Danach werden die Greifarme noch etwas angehoben, so dass sie die Rauchstöcke 1 von ihren Lagerstellen abheben.

Nunmehr werden die Greifarme eingezogen und die Rauchstöcke, wie oben beschrieben, durch das Portal 3 in das Innere der Vorrichtung verlagert. Die Greifarme 2.1 und 2.2 werden dann auf die Höhe der Transportketten 5.1 und 5.2 angehoben und von diesen übernommen. Durch die Motoren 23.1 und 23.2 werden die Rauchstöcke 1 zu dem Profil 25 hin transportiert und werden dort auf die Endloskette 28 übergeben. Dies geschieht exakt zwischen zwei Anschlägen 29.1 bis 29.3, welche den Rauchstock 1 zwischen sich so halten, dass die Fäden, an denen die Würste hängen, nach unten hin frei sind. Deshalb stehen die Anschläge von der Endloskette 28 ab.

Nunmehr wird der Rauchstock 1 der Schneideinrichtung 30 zugeführt, wobei ein entsprechender, nicht dargestellter Sensor z.B. an dem Motor 23.1 erkennt, wann ein Randstand der Wurst beginnt, bzw. wie lang der Faden ist bzw. ob an der Wurst ein Clip angeordnet ist. Dies alles kann beim Abschneiden der Wurst berücksichtigt werden, so dass die Schneideinrichtung in eine Höhe angehoben wird, dass auf jeden Fall die Schnur nahe am Wurstrand abgeschnitten wird. Wird dann später die Wurst beispielsweise in einem Schlauchbeutel versiegelt, so kann keine überschüssige Schnur aus dem Beutel herausschauen bzw. die Siegelnaht stören.

Die abgeschnittene Wurst fällt dann in den Schacht 32 und auf das Transportband 33 und wird zu einer weiteren Bearbeitungsstation gebracht. Der Rauchstock 1 wird durch den jeweiligen Anschlag 29.1 bis 29.3 weiter aus der Vorrichtung ausgestossen bzw. durch die Leitrolle 34 ausgeleitet.

**Bezugszeichenliste**

| | | | | | |
|---|---|---|---|---|---|
| 1 | Rauchstock | 34 | Leitrolle | 67 | |
| 2 | Greifarm | 35 | | 68 | |
| 3 | Portal | 36 | | 69 | |
| 4 | Doppelpfeil | 37 | | 70 | |
| 5 | Transportkette | 38 | | 71 | |
| 6 | Zahnrad | 39 | | 72 | |
| 7 | Vertikalschlitten | 40 | | 73 | |
| 8 | Säule | 41 | | 74 | |
| 9 | Grundrahmen | 42 | | 75 | |
| 10 | Traverse | 43 | | 76 | |
| 11 | Motor | 44 | | 77 | |
| 12 | Welle | 45 | | 78 | |
| 13 | Zahnrad | 46 | | 79 | |
| 14 | Zahnriemen | 47 | | | |
| 15 | Umlenkrolle | 48 | | | |
| 16 | Lagerlasche | 49 | | | |
| 17 | Querträger | 50 | | | |
| 18 | Anschlussschuh | 51 | | | |
| 19 | Tragplatte | 52 | | | |
| 20 | Vertikalpfosten | 53 | | | |
| 21 | Umlenkzahnrad | 54 | | | |
| 22 | Wellenstummel | 55 | | | |
| 23 | Motor | 56 | | | |
| 24 | Verbindungswelle | 57 | | | |
| 25 | Profil | 58 | | | |
| 26 | Tragfläche | 59 | | | |
| 27 | Mittelwand | 60 | | | |
| 28 | Endloskette | 61 | | | |
| 29 | Anschlag | 62 | | | |
| 30 | Schneideinrichtung | 63 | | | |
| 31 | Niederhalter | 64 | | | |
| 32 | Schacht | 65 | | | |
| 33 | Transportband | 66 | | | |

## Patentansprüche

1. Vorrichtung zum Entladen von Rauchwägen, in denen Würste mittels Fäden an Stöcken (1) aufgehängt sind, mit in der Höhe verfahrbaren Greifarmen (2.1, 2.2), die an Säulen (8.1, 8.2) angeordnet und horizontal ausfahrbar sind, wobei den Greifarmen (2.1, 2.2) Fördermittel (5.1, 5.2, 28) für die Stöcke (1), an denen die Würste hängen, zugeordnet sind,
**dadurch gekennzeichnet,**
**dass** zwei Fördermittel (5.1, 5.2) zum Längstransfer der Stöcke (1) zu einer Schneideinrichtung (30) hin vorgesehen sind, denen ein weiteres Fördermittel (28) zum Quertransfer der Stöcke (1) oberhalb der Schneideinrichtung (30) quer zu den zwei Fördermitteln (5.1, 5.2) verlaufend zugeordnet ist.

2. Vorrichtung nach Anspruch 1, **dadurch gekennzeichnet, dass** die Fördermittel liegende Endlosketten (5.1, 5.2, 28) sind.

3. Vorrichtung nach Anspruch 1 oder 2, **dadurch gekennzeichnet, dass** die Schneideinrichtung (30) in der Höhe verfahrbar ist.

4. Vorrichtung nach wenigstens einem der Ansprüche 1 bis 3, **dadurch gekennzeichnet, dass** der Schneideinrichtung (30) zumindest ein Sensor zum Erkennen des Fadens, eines Clips und/oder eines Randstandes der Wurst zugeordnet ist.

## Claims

1. Device for unloading mobile smokehouses, in which sausages are suspended by means of string from sticks (1), comprising vertically displaceable gripping arms (2.1, 2.2), which are disposed on pillars (8.1, 8.2) and extendable horizontally, wherein associated with the gripping arms (2.1, 2.2) are conveying means (5.1, 5.2, 28) for the sticks (1), from which the sausages are suspended,
**characterized in**
**that** two conveying means (5.1, 5.2) for longitudinally conveying the sticks (1) in the direction of a cutting device (30) are provided, with which a further conveying means (28) for transversely conveying the sticks (1) above the cutting device (30) is associated, which extends transversely of the two conveying means (5.1, 5.2).

2. Device according to claim 1, **characterized in that** the conveying means are horizontal continuous chains (5.1, 5.2, 28).

3. Device according to claim 1 or 2, **characterized in that** the cutting device (30) is vertically displaceable.

4. Device according to at least one of claims 1 to 3, **characterized in that** associated with the cutting device (30) is at least one sensor for detecting the string, a clip and/or a marginal state of the sausage.

## Revendications

1. Dispositif de déchargement de chariots de fumage dans lesquels des saucisses sont suspendues au moyen de fils à des cannes (1), avec des bras de préhension déplaçables en hauteur (2.1, 2.2) qui sont disposés sur des colonnes (8.1, 8.2) et pouvant être sortis horizontalement, aux bras de préhension (2.1, 2.2) étant associés des moyens de transport (5.1, 5.2, 28) des cannes (1) auxquelles sont suspendues les saucisses,
**caractérisé par le fait**
**qu'**il est prévu deux moyens de transport (5.1, 5.2) pour le transfert longitudinal des cannes (1) vers un dispositif de coupe (30), auxquels est associé un autre moyen de transport (28), s'étendant transversalement aux deux moyens de transport (5.1, 5.2), pour le transfert transversal des cannes (1) au-dessus du dispositif de coupe (30).

2. Dispositif selon la revendication 1, **caractérisé par le fait que** les moyens de transport sont des chaînes sans fin horizontales (5.1, 5.2, 28).

3. Dispositif selon la revendication 1 ou 2, **caractérisé par le fait que** le dispositif de coupe (30) est déplaçable en hauteur.

4. Dispositif selon au moins l'une des revendications 1 à 3, **caractérisé par le fait qu'**au dispositif de coupe (30) est associé au moins un capteur pour identifier le fil, un clips et/ou un repère de bord de la saucisse.
